# EUROPEAN PATENT SPECIFICATION

(11) **EP 4 272 232 B1**
(45) Date of publication and mention of the grant of the patent: **06.05.2026**
(21) Application number: 21847501.0
(22) Date of filing: 24.12.2021
(51) Int. Cl.: H01F 27/28, H01F 27/42, H01F 27/40, H02M 1/44, H02M 3/335, H05B 45/3725

(54) **A TRANSFORMER**
WANDLER
TRANSFORMATEUR

(30) Priority: 04.01.2021 WO PCT/CN2021/070126; 10.05.2021 EP 21172921
(43) Date of publication of application: 08.11.2023
(73) Proprietor: Signify Holding B.V., 5656 AE Eindhoven (NL)
(72) Inventor: ZHANG, Hui, 5656 AE Eindhoven (NL); XIONG, Zhian, 5656 AE Eindhoven (NL); HU, Guofu, 5656 AE Eindhoven (NL)
(74) Representative: Verweij, Petronella Daniëlle
(86) International application number: PCT/EP2021/087633
(87) International publication number: WO 2022/144323

(56) References cited:
- JP-A- 2000 188 221
- JP-A- H04 258 106
- JP-A- S60 226 112
- US-A1- 2013 235 619
- US-A1- 2018 166 205
- US-A1- 2020 357 571

## Description

### FIELD OF THE INVENTION

This invention relates to transformers, for example flyback transformers used in LED lighting drivers.

### BACKGROUND OF THE INVENTION

Solid state lighting units, and in particular LED-based (retrofit) lamps, are used more and more in home buildings and offices. Besides their high efficiency they also attract consumers due to new design features, different color temperatures, dimming ability etc.

To fit LED lighting to existing mains lighting fixtures, each LED light unit makes use of a converter circuit, for converting the AC mains into a DC drive signal, and also for reducing the voltage level. The converter circuit typically comprises a rectifier and a switched mode power converter.

There are various possible designs of switched mode power converter. A low-cost switched mode power converter is a single stage converter, such as a buck converter or a buck-boost converter. In both cases, there is a main inductor which controls the delivery of energy to the load. A main power switch controls the supply of energy from the input to the main inductor.

For isolation/safety requirement, isolated converters such as flyback converters are also used, which have a transformer with a primary winding connected to the input and the main power switch, and a secondary winding connected to the load. Energy is converted from the primary winding to the secondary winding via an electro-magnetic-electro conversion.

US2020357571A1 discloses a transformer structure wherein the primary coil, the secondary coil, and multiple auxiliary coils are wound into the transformer structure.

Tolerating electromagnetic interference (EMI) is generally challenging. It is known to add a dedicated and discrete capacitor such as a Y-capacitor between the two grounds of both the primary side and the secondary side to suppress the EMI, but the discrete capacitor takes up area on the PCB.

There is therefore a need for an improved solution to provide the Y-capacitor in a space-saving manner.

### SUMMARY OF THE INVENTION

The invention is defined by the claims.

It is a concept of the invention to provide a transformer comprising a winding structure which forms a primary side coil and a secondary side coil. Additionally incorporated into this winding structure are first and second wires. The first wire is electrically coupled to a primary side circuit including the first coil and the second wire is electrically coupled to a secondary side circuit including the second coil, and the first wire and the second wire define a capacitance between them. This capacitance has a value which may be controlled by design, and it functions as a controllable parasitic capacitance of the transformer. This capacitance may for example be used for EMI suppression.

According to examples in accordance with an aspect of the invention, there is provided a transformer comprising a winding structure, wherein the winding structure comprises:
a first, primary side, coil having first and second ends, the first coil being a part of a primary side circuit;
a second, secondary side, coil having first and second ends, the second coil being a part of a secondary side circuit;
a first wire; and
a second wire, the first wire and the second wire are different from the first coil and the second coil; and
a first end of the first wire is connected to the primary side wherein the first end of the first wire is electrically connected to a cold point of the primary side circuit and a first end of the second wire is connected to the secondary side wherein the first end of the second wire is electrically connected to a cold point of the secondary side circuit;
wherein at least one of the first wire and the second wire is insulated by an insulating coating,
wherein the first and second wires are alongside and adjacent each other, thereby to define a capacitance between them, and are wound into the coil structure of the transformer.

This transformer makes use of additional conducting wires (in addition to the primary and secondary coils) to define a capacitance. They are however part of the structure of the transformer, and thus integrated into the structure of the transformer. One end of the additional first wire is electrically connected to a primary side circuit (including the primary coil) and one end of the second wire is electrically connected to a secondary side circuit (including the secondary coil), so that they form a parasitic capacitance between the primary and secondary sides. This parasitic capacitance is thus more accurately defined, and it may be used to function as a Y-capacitor for providing EMI suppression. Thus, a dedicated discrete Y-capacitor can be provided and the PCB size can be reduced.

The transformer is for example used in a LED driver and the capacitor is used to provide EMI suppression between the primary and secondary sides of transformer.

The first and second wires are for example wound using a bifilar method. The two wires in this way are implemented as additional windings, but preferably with one end floating, so that they together define a series capacitor between the first and second coils.

The cold point is a point that is decoupled from a high frequency dv/dt, thereby the capacitance (C_{Y}) forming a Y-capacitor across the primary side and the secondary side.

By connecting the two cold points of the primary and secondary side circuits with the Y capacitor, the EMI can be suppressed effectively.

In one detailed embodiment, the cold point is the ground. The first end of the first wire is electrically coupled to a ground of the primary side circuit; and the first end of the second wire is electrically coupled to a ground of the secondary side circuit.

The first and second wires are for example electrically coupled to ground terminals of the primary and secondary sides respectively. This makes a simple implementation of the Y-capacitor, across the isolated sides, within the transformer structure.

Alternatively, the cold point may be the high voltage points of the primary and secondary side circuits. The first end of the first wire is electrically coupled to a high voltage end of the primary side circuit, and the first end of the second wire is electrically coupled to a high voltage end of the secondary side circuit. In this example, the capacitance is formed between two high voltage points of two sides, and this can also provide a Y capacitor for EMI suppression.

Even alternatively, the Y capacitor can be connected between a ground and a high voltage end, respectively on different sides.

In the above alternative embodiments, the capacitance is formed between two cold points of the primary and secondary sides, thus it is capable of suppressing the EMI.

Preferably, a second end of the first wire is electrically floating and a second end of the second wire is electrically floating, without being connected to any point in the primary side circuit and secondary side circuit. As an electrode of a capacitor, it is possible to have electrode connects to external circuits only via the first end, and to have the second end floating.

The first end of the first coil is a for example a low voltage end relative to the second end of the first coil. The first end of the first coil is adapted to be connected to a current flow-in terminal of a switch, in case of a low side drive topology. The second end of the first coil is then adapted to receive an input voltage, and the first wire is adapted to be coupled to a current flow-out terminal of the switch.

The first end of the second coil is for example a low voltage end relative to the second end of the second coil and is adapted to be connected to a negative terminal of a load. The second end of the second coil is then adapted to be connected to a positive terminal of a load.

In a low side drive topology, this first end of the first coil is for example connected to the drain (the high voltage terminal) of the main switching MOSFET of a switch mode power converter. The first end of the first wire may be connected to the source of the main switching MOSFET optionally via a current sense resistor.

The transformer is for example adapted to be used in an isolated power converter comprising a primary side and a secondary side, wherein:
the first coil and the first wire are adapted to be placed in the primary side; and
the second coil and the second wire are adapted to be placed in the secondary side.

The capacitance formed by the first and second wires is then a series capacitance between the primary and secondary sides which serves as the Y-capacitor for suppressing EMI.

The at least one of the first wire and the second wire is for example triple insulated. This provides a desired insulation and dielectric between the wires for implementing a suitable capacitor.

Principally, the length and diameter of the first wire and the second wire are adapted to form an effective area of the anode and cathode of an effective capacitor corresponding to the capacitance, a distance between the first wire and the second wire is adapted to form the effective space between the anode and cathode of the effective capacitor, and the insulating coating has a dielectric constant thereby providing the dielectric in the space.

Thus, capacitor plate areas are effectively formed by a pair of interleaved coiled wired wires.

The dielectric constant is from 1 to 5.

The capacitance is for example in the range 1pF to 1nF.

According to the present invention, the first and second wires extend within a space between the first and second coils. This provides a compact arrangement with the wires integrated internally into the structure of the transformer between the primary and secondary coils.

The first coil wound around an axis at a radially inner portion of the transformer, the second coil is wound around the axis at a radially outer portion of the transformer, and the first and second wires are wound at a radially middle portion between the radially inner and the outer portions.

The invention also provides a LED lighting driver comprising:
an output for coupling to an LED lighting load; and
a switched mode flyback converter for delivering energy to the output and to the LED lighting load, wherein the flyback converter comprises the transformer defined above, functioning as a flyback transformer, wherein the second coil is connected to the output.

The invention also provides a LED lighting device comprising:
a LED lighting load; and
the LED lighting driver defined above, wherein the output of the LED lighting driver is connected to the LED lighting load.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a first known transformer layout;
Fig. 2 shows a second known transformer layout;
Fig. 3 shows a transformer architecture in accordance with the invention;
Fig. 4 shows the overall structure of the transformer in exploded view;
Fig. 5 shows possible circuit connections for the transformer;
Fig. 6 shows a circuit diagram resulting from the connections shown in Figure 5, with a load in the form of an LED; and
Fig. 7 shows the cold points to which the Y capacitor can be formed between, and the hot points.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a transformer comprising a winding structure which forms a primary side coil, a secondary side coil and first and second wires wound into the coil structure of the transformer. The first wire and second wires define a capacitance between them. This capacitance may for example be used for EMI suppression.

It is known to add a dedicated discrete capacitor between the primary winding and secondary winding of a transformer as a Y-capacitor, for EMI improvement.

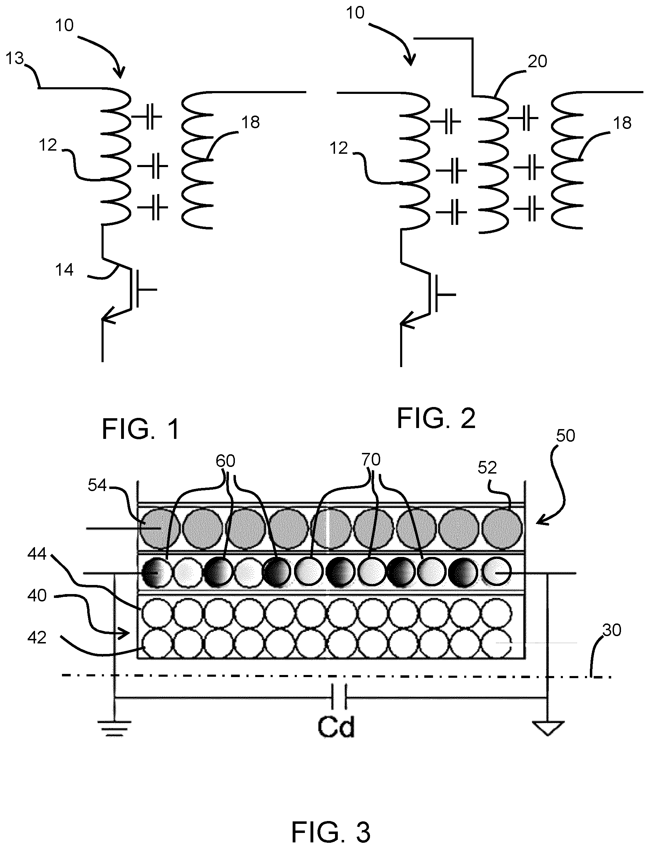

Figure 1 shows a transformer 10 having a primary side coil 12 which connects between a positive input terminal 13 and the drain of a transistor 14. This is for example part of the basic circuit of a switch mode power converter. The secondary side coil 18 connects to a load.

Parasitic capacitances are represented in Figure 1 between the primary side coil 12 and the secondary side coil 18.

Figure 2 shows the transformer 10, again with a primary side coil 12 and secondary side coil 18, and an additional winding 20. Parasitic capacitances are represented in Figure 2 between the primary side coil 12 and the additional winding 20 and between the additional winding 20 and the secondary side coil 18.

There are problems with the use of the parasitic capacitance in the above transformer: this parasitic capacitance is not good for EMI suppression since the parasitic capacitance is between a hot point on one side and a cold point on the other side, a high dv/dt during the switching would generate a large common mode current and the EMI is worsen. Moreover, it has a low capacitance and low accuracy, since the uniformity of winding the coils cannot be ensured. For example, the distance and alignment are difficult to repeat product by product).

Figure 3 shows a transformer architecture in accordance with the invention.

Figure 3 shows the winding structure of the transformer. The windings are formed around a bobbin (not shown), with a central axis 30. Thus, Figure 3 shows the windings in cross section and only at one side of the central axis 30.

The transformer has a first, primary side, coil 40 wound around the axis 30 at a radially inner portion of the transformer. In the example shown, the first coil has a depth of two windings. A second, secondary side, coil 50 is wound around the axis 30 at a radially outer portion of the transformer. In the example shown, the second coil has a depth of one winding.

The first coil 40 has a first end 42 and a second end 44. In this example, the first and second ends 42,44 are at the same lateral side of the transformer, so the radially inner winding of the coil is wound along the direction of the axis from one side to the other (left to right in Figure 3) and then the outer winding is wound back (right to left).

The second coil has a first end 52 and a second end 54.

In addition to the primary and secondary coils, a first wire 60 is provided, and is connected to the primary side circuit including the first coil 40. A second wire 70 is provided and is connected to the secondary side circuit including the second coil 50. One or both of the first wire and the second wire is insulated by an insulating coating.

As shown in Figure 3, the first and second wires 60, 70 are wound around the axis 30 and are adjacent and alongside each other thereby to define a capacitance between them. In particular, in this example they form an interleaved pair of coils at one radial distance from the axis (i.e. with a depth of one winding). The first and second wires are wound into the coil structure of the transformer. This arrangement of the first and second wires may be obtained by winding using a bifilar method, by which a pair of closely spaced parallel windings may be formed.

The first and second wires 60, 70 are wound at a radially middle portion between the radially inner portion where the first, primary, coil 40 is located and the radially outer portion wherein the second, secondary, coil 50 is located. There may be insulation tapes to structurally separate the first coil, the first and second wires, and the second coil.

Preferably, a second end of the first wire 60 is electrically floating and a second end of the second wire 70 is electrically floating. The capacitance is thus defined in series between the primary and secondary sides.

This transformer thus makes use of additional conducting wires (different from the primary and secondary coils) to define an effective capacitance Cd. One of the first and second wires is for example triple insulated. This provides a desired dielectric between the wires for implementing a suitable capacitor.

The length and diameter of the first wire and the second wire are chosen to define a desired an effective area of the anode and cathode of the capacitor structure which forms Cd. Similarly, the distance between the first wire and the second wire forms an effective electrode spacing between the anode and cathode of the capacitor structure, and the insulating coating has a dielectric constant thereby providing the dielectric in the space.

Thus, the capacitor is effectively formed by a pair of interleaved coiled wired wires.

The dielectric is from 1 to 5. The capacitance is for example in the range 1pF to 1nF.

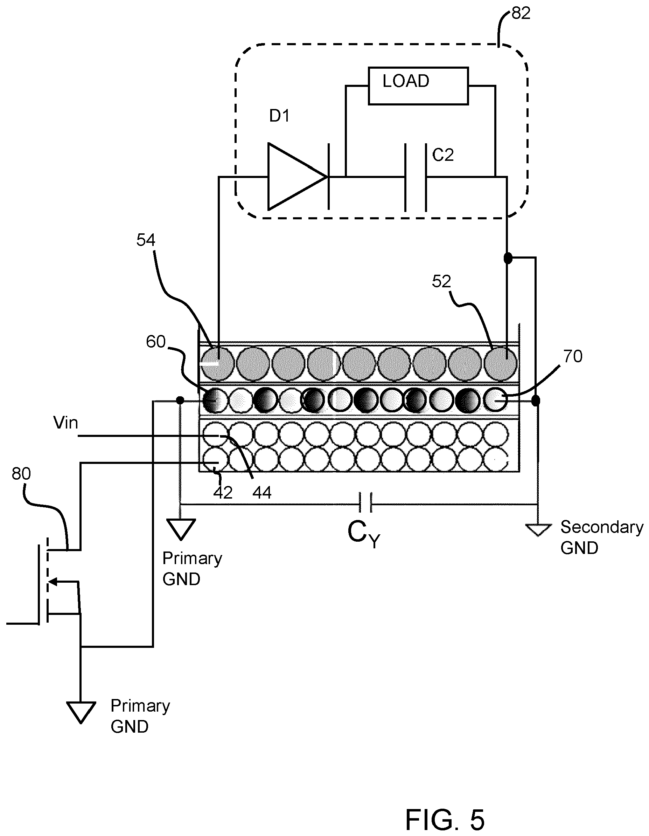

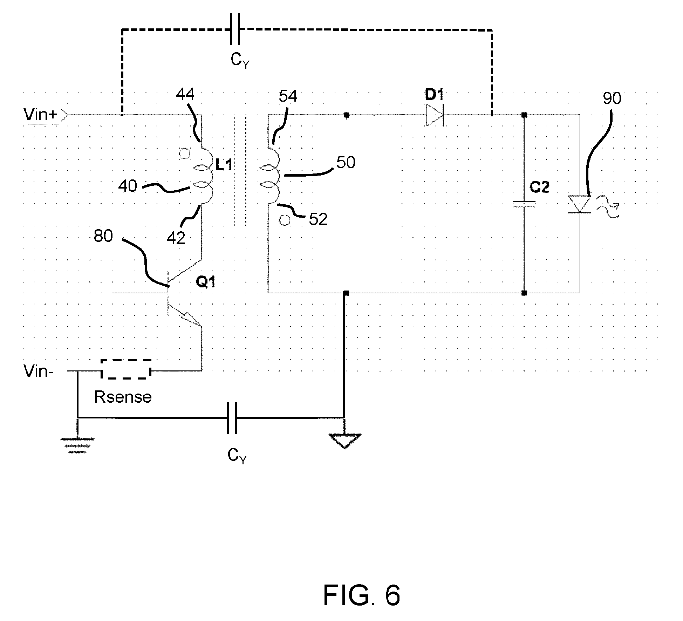

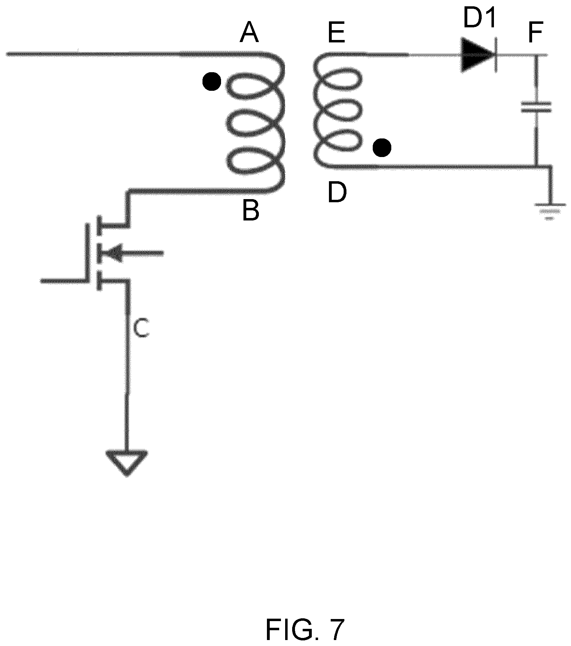

The two wires are still part of the winding structure of the transformer, and thus integrated into the structure of the transformer. As will be described below together with the external circuit, one wire is electrically connected to the primary side and the other wire is electrically connected to the secondary side, so that they form a parasitic capacitance between the primary and secondary sides of the transformer. This parasitic capacitance is thus more accurately defined, and it may be used to function as a Y-capacitor for providing EMI suppression, if connected properly to both cold points of two sides, such as both to the grounds of two sides respectively as shown in Figure 5 and 6, or to both the high voltage ends of the two sides as is additionally shown in Figure 6. The cold points are the points that are decoupled from high frequency dv/dt during the switching of the switched mode power converter; on the contrary, hot points are the points that is with high frequency dv/dt. Figure 7 shows the respective cold points and hot points, wherein cold points include A, C, D, and F, hot points includes B and E. Please note that the cold points may vary depending on the place of the component, even if the converter is still a flyback converter. For example, if the diode D1 in figure 7 is put in the lower side namely forward from the ground terminal to the dotted terminal of the second coil, then points E and F (as well as the ground) of the secondary side are cold points, while the point D is no longer a cold point. Or, if the low side driving flyback is changed to high side driving flyback, namely the switch is moved between the input voltage and the second end of the first coil, then the cold points on the primary side include the input voltage point, first end B/C of the first coil and the ground, while the second end A of the first coil is no longer a cold point.

The transformer is for example used in a LED driver and the capacitor is used to provide EMI suppression between the primary and secondary sides of transformer. The transformer may be part of an auxiliary power supply or it may be part of the normal power supply to the LED load.

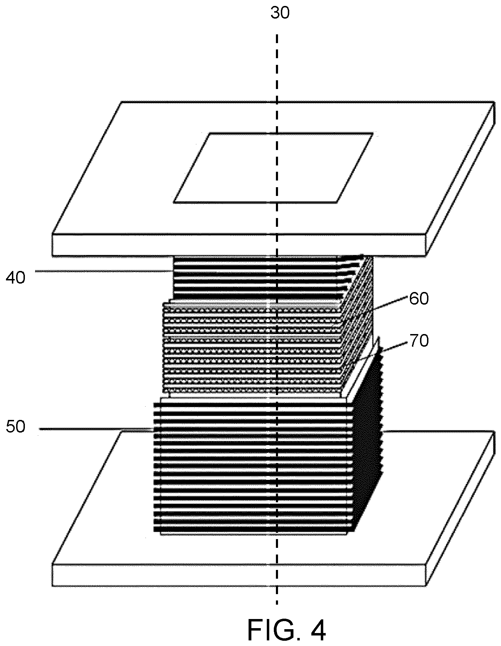

Figure 4 shows the overall structure of the transformer in exploded view. It shows the radially inner first coil 40, the first and second wires 60,70 located further radially out, and the second coil 50 around the outside. The winding structure is around a ferrite core.

Figure 5 shows one possible circuit connections for the transformer. The Y capacitor C_{Y} is shown as a circuit component, but it is the effective capacitor formed by the wires 60 and 70, not a real discrete component. The function of this effective capacitor can be understood from Figure 6, described below.

The first end 42 of the first coil 40 is a for example a low voltage end relative to the second end 44 of the first coil 40. The first end 42 connects to a current flow-in terminal of a switch 80. The second, high voltage, end 44 of the first coil receives an input voltage Vin. Here at the primary side, the low/high voltage is named according to their voltage in the charging phase of flyback conversion.

The first wire 60 is coupled to a current flow-out terminal of the switch 80, which in this example is the primary side ground.

The first end 52 of the second coil is for example also a low voltage end relative to the second end 54 of the second coil and connects to a negative terminal of a load 82. Here at the secondary side, the low/high voltage is named according to their voltage in the freewheeling phase of flyback conversion. This connection may be the ground of the secondary side. The second, high voltage, end 54 of the second coil connects to a positive terminal of the load 82.

The load is shown as the combination of a freewheeling diode D1, storage capacitor C2 and the load to be supplied with energy, such as a LED arrangement.

The second wire 70 connects to the first end 52 of the second coil which is also the ground of the secondary side circuit.

This first end of the first wire 60 is connected to the source (the lower voltage terminal) of the switching MOSFET 80, which is the main switch of a switch mode power converter. This is shown as the ground of the primary side circuit, although there may also be a current sense resistor connected between the ground and the source (as shown in Figure 6).

The capacitance formed by the first and second wires is thus in this example a series capacitance between the grounds of the primary and secondary sides. It is represented by the capacitor Cy.

Figure 6 shows a circuit diagram resulting from the connections shown in Figure 5, with a load in the form of an LED.

The invention is of particular interest for a flyback transformer, as shown in Figure 6. In one example, corresponding to the circuit connections shown in Figure 5, the capacitor C_{Y} is connected between the two grounds of both sides. It avoids the need for a separate Y-capacitor for providing EMI suppression.

As an alternative solution, the Y-capacitor can be connected to both high voltage points of the both sides, shown by the dashed line and capacitor C_{Y} at the top of Figure 6. Thus, Figure 6 shows two possible but separate implementations of the capacitor. This can also suppress the EMI. Both example are based on the fact that the Y-capacitor should be placed between two cold points on both sides for EMI suppression. It can also be that the Y-capacitor is connected between the high voltage point at the primary side circuit, and the ground of the secondary side circuit, say point A to point D in figure 7; or between the ground of the primary side circuit and the high voltage point of the secondary side circuit, say point C and F in figure 7.

The implementation of the invention provides the cold points of the two main power sides (primary and secondary) with wire extensions which are aligned with each other, within the transformer, to form a more uniform parasitic capacitance between the primary and secondary side circuits.

The windings used in the winding structure are typically copper or aluminum. The wires may be round wires, or rectangular flat wires for example.

The structure is easily connected into the primary and secondary side circuit. In the first embodiment wherein the wires are to be connected to the ground, the first end of the first wire is exposed and can be connected as one transformer pin to the ground by an external wiring, while the first end of the second wire can connect to the first end of the second coil directly within the transformer. In the second embodiment wherein the wires are to be connected to the high voltage points, the first end of the first wire can connect to the second ends of the first coil directly within the transformer, and the first end of the second wire is exposed and can be connected to the anode of the load/output capacitor via an external wiring. The second ends respectively are electrically floating and can thus be buried in the structure of the transformer without being connected to any point in the primary side circuit or in the secondary side circuit.

The length of the pair of wires will depend various design features, such as different bobbin designs, and the number of turns and layers of the windings. The capacitance will change accordingly. The capacitance follows a similar relationship to a plate capacitor, wherein the area is the total length of the adjacent wires wire multiplied by the diameter of the wire, and the plate separation distance is the insulation thickness between the two wires. If the bobbin is made larger, the wires become longer, and the capacitance is higher. The easiest way to obtain a desired capacitance of the Y cap is winding a proper number of turns of the two wires.

By way of example, with windings with 8 turns in a single layer, a capacitance of 40pF is representative.

The spacing between the wires will also vary by design, but may for example be in the range 0.3mm to 2mm for example 0.5mm. The wire itself can for example withstand 5kVac. After winding, it can withstand 3.75kVac.

The invention is of particular interest for use in a switch mode power converter, and in particular as a flyback transformer in such a power converter.

The switch mode power converter is preferably part of a LED lighting driver in which an output from the secondary side is for coupling to an LED lighting load. A LED lighting device for example comprises a LED lighting load and this lighting driver, with the output of the LED lighting driver connected to the LED lighting load.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A transformer comprising a winding structure, wherein the winding structure comprises:
a first, primary side, coil (40) having first and second ends, the first coil (40) being a part of a primary side circuit;
a second, secondary side, coil (50) having first and second ends, the second coil (50) being a part of a secondary side circuit;
a first wire (60); and
a second wire (70), the first wire (60) and the second wire (70) are different from the first coil (40) and the second coil (50);
wherein a first end of the first wire (60) is connected to the primary side wherein the first end of the first wire (60) is electrically connected to a cold point of the primary side circuit,
wherein at least one of the first wire and the second wire is insulated by an insulating coating,
wherein the first and second wires are alongside and adjacent each other, thereby to define a capacitance (C_{Y}) between them, and are wound into the coil structure of the transformer,
wherein a cold point is a point that is decoupled from a high frequency dv/dt, thereby the capacitance (C_{Y}) forming a Y-capacitor across the primary side and the secondary side for suppressing EMI,
wherein the first and second wires (60,70) extend within a space between the first and second coils and wherein the first coil is wound around an axis (30) at a radially inner portion of the transformer, the second coil is wound around the axis at a radially outer portion of the transformer, and the first and second wires are wound at a radially middle portion between the radially inner and the outer portions,
**characterized in that** a first end of the second wire (70) is connected to the secondary side wherein the first end of the second wire (70) is electrically connected to a cold point of the secondary side circuit.

2. The transformer of claim, wherein:
the first end of the first wire (60) is electrically coupled to a ground of the primary side circuit, or the first end of the first wire (60) is electrically coupled to a high voltage end of the primary side circuit; and
the first end of the second wire (70) is electrically coupled to a ground of the secondary side circuit, or the first end of the second wire (70) is electrically coupled to a high voltage end of the secondary side circuit.

3. The transformer of claim 2, wherein the high voltage end of the primary side circuit is connected to an input voltage, and high voltage end of the secondary side circuit is connected to a load.

4. The transformer of claim 1 or 2, wherein a second end of the first wire (60) is electrically floating and a second end of the second wire (70) is electrically floating, without being connected to any point in the primary side circuit and secondary side circuit.

5. The transformer of any one of claims 1 to 4, wherein:
the first end (42) of the first coil (40) is a low voltage end relative to a second end (44) of the first coil (40) and is adapted to be connected to a current flow-in terminal of a switch (80);
the second end (44) of the first coil is adapted to receive an input voltage;
the first wire (60) comprising a connection terminal, at its first end, adapted to be coupled to a current flow-out terminal of the switch (80);
the first end (52) of the second coil (50) is a low voltage end relative to the second end (54) of the second coil (50) and is adapted to be connected to a negative terminal of a load (82); and
the second end (54) of the second coil (50) is adapted to be connected to a positive terminal of the load (82).

6. The transformer of claim 5, wherein the transformer is adapted to be used in an isolated power converter comprising a primary side and a secondary side, wherein:
the first (40) coil and the first wire (60) are adapted to be placed in the primary side; and
the second coil (50) and the second wire (70) are adapted to be placed in the secondary side.

7. The transformer of claim 5 or 6, wherein the first end of the first coil (40) is electrically coupled to the current flow-out terminal of the switch (80) via a sensing resistor (Rsense).

8. The transformer of any one of claims 1 to 7, wherein the said at least one of the first wire (60) and the second wire (70) is triple insulated.

9. The transformer of any one of claims 1 to 8, wherein the length and diameter of the first wire (60) and the second wire (70) are adapted to form an effective area of the anode and cathode of an effective capacitor corresponding to the capacitance, a distance between the first wire and the second wire is adapted to form the effective space between the anode and cathode of the effective capacitor, and the insulating coating has a dielectric constant thereby providing the dielectric in the space.

10. The transformer of any one of claims 1 to 9, wherein the capacitance is in the range 1pF to 1nF.

11. A LED lighting driver comprising:
an output for coupling to an LED lighting load; and
a switched mode flyback converter for delivering energy to the output and to the LED lighting load, wherein the flyback converter comprises the transformer of any one of claims 1 to 13, functioning as a flyback transformer, wherein the second coil is connected to the output.

12. A LED lighting device comprising:
a LED lighting load; and
the LED lighting driver of claim 11, wherein the output of the LED lighting driver is connected to the LED lighting load.

## Patentansprüche

1. Transformator, der eine Wicklungsstruktur umfasst, wobei die Wicklungsstruktur umfasst:
eine erste, primärseitige Spule (40) mit einem ersten und einem zweiten Ende, wobei die erste Spule (40) ein Teil einer primärseitigen Schaltung ist;
eine zweite, sekundärseitige Spule (50) mit einem ersten und einem zweiten Ende, wobei die zweite Spule (50) ein Teil einer sekundärseitigen Schaltung ist;
einen ersten Draht (60) und
einen zweiten Draht (70), wobei der erste Draht (60) und der zweite Draht (70) von der ersten Spule (40) und der zweiten Spule (50) verschieden sind;
wobei ein erstes Ende des ersten Drahts (60) mit der Primärseite verbunden ist, wobei das erste Ende des ersten Drahts (60) elektrisch mit einem Kaltpunkt der primärseitigen Schaltung verbunden ist,
wobei mindestens einer von dem ersten Draht und dem zweiten Draht durch eine isolierende Beschichtung isoliert ist,
wobei der erste und der zweite Draht nebeneinander und angrenzend zueinander angeordnet sind, um dadurch eine Kapazität (C_{Y}) zwischen ihnen zu definieren, und in die Spulenstruktur des Transformators gewickelt sind,
wobei ein Kaltpunkt ein Punkt ist, der von einer Hochfrequenz-dv/dt entkoppelt ist, wodurch die Kapazität (C_{Y}) einen Y-Kondensator über die Primärseite und die Sekundärseite zum Unterdrücken von EMI bildet,
wobei sich der erste und der zweite Draht (60, 70) innerhalb eines Raums zwischen der ersten und der zweiten Spule erstrecken und wobei die erste Spule um eine Achse (30) an einem radial inneren Abschnitt des Transformators gewickelt ist, die zweite Spule um die Achse an einem radial äußeren Abschnitt des Transformators gewickelt ist und der erste und der zweite Draht an einem radial mittleren Abschnitt zwischen dem radial inneren und äußeren Abschnitt gewickelt sind,
**dadurch gekennzeichnet, dass** ein erstes Ende des zweiten Drahts (70) mit der Sekundärseite verbunden ist, wobei das erste Ende des zweiten Drahts (70) elektrisch mit einem Kaltpunkt der sekundärseitigen Schaltung verbunden ist.

2. Transformator nach Anspruch 1, wobei:
das erste Ende des ersten Drahts (60) elektrisch an eine Masse der primärseitigen Schaltung gekoppelt ist oder das erste Ende des ersten Drahts (60) elektrisch an ein Hochspannungsende der primärseitigen Schaltung gekoppelt ist und
das erste Ende des zweiten Drahts (70) elektrisch an eine Masse der sekundärseitigen Schaltung gekoppelt ist oder das erste Ende des zweiten Drahts (70) elektrisch an ein Hochspannungsende der sekundärseitigen Schaltung gekoppelt ist.

3. Transformator nach Anspruch 2, wobei das Hochspannungsende der primärseitigen Schaltung mit einer Eingangsspannung verbunden ist und das Hochspannungsende der sekundärseitigen Schaltung mit einer Last verbunden ist.

4. Transformator nach Anspruch 1 oder 2, wobei ein zweites Ende des ersten Drahts (60) elektrisch potentialfrei ist und ein zweites Ende des zweiten Drahts (70) elektrisch potentialfrei ist, ohne mit irgendeinem Punkt in der primärseitigen Schaltung und der sekundärseitigen Schaltung verbunden zu sein.

5. Transformator nach einem der Ansprüche 1 bis 4, wobei:
das erste Ende (42) der ersten Spule (40) ein Niederspannungsende relativ zu einem zweiten Ende (44) der ersten Spule (40) ist und dazu ausgelegt ist, mit einem Stromzuflussanschluss eines Schalters (80) verbunden zu werden;
das zweite Ende (44) der ersten Spule dazu ausgelegt ist, eine Eingangsspannung zu empfangen;
der erste Draht (60) an seinem ersten Ende eine Verbindungsklemme umfasst, die dazu ausgelegt ist, an eine Stromausgangsklemme des Schalters (80) gekoppelt zu werden;
das erste Ende (52) der zweiten Spule (50) ein Niederspannungsende relativ zu dem zweiten Ende (54) der zweiten Spule (50) ist und dazu ausgelegt ist, mit einem negativen Anschluss einer Last (82) verbunden zu werden; und
das zweite Ende (54) der zweiten Spule (50) dazu ausgelegt ist, mit einem positiven Anschluss der Last (82) verbunden zu werden.

6. Transformator nach Anspruch 5, wobei der Transformator dazu ausgelegt ist, in einem isolierten Leistungswandler verwendet zu werden, der eine Primärseite und eine Sekundärseite umfasst, wobei:
die erste (40) Spule und der erste Draht (60) dazu ausgelegt sind, an der Primärseite angeordnet zu werden; und
die zweite Spule (50) und der zweite Draht (70) dazu ausgelegt sind, an der Sekundärseite angeordnet zu werden.

7. Transformator nach Anspruch 5 oder 6, wobei das erste Ende der ersten Spule (40) über einen Messwiderstand (RMess) elektrisch an den Stromausgangsanschluss des Schalters (80) gekoppelt ist.

8. Transformator nach einem der Ansprüche 1 bis 7, wobei der mindestens eine von dem ersten Draht (60) und dem zweiten Draht (70) dreifach isoliert ist.

9. Transformator nach einem der Ansprüche 1 bis 8, wobei die Länge und der Durchmesser des ersten Drahts (60) und des zweiten Drahts (70) dazu ausgelegt sind, eine effektive Fläche der Anode und Kathode eines effektiven Kondensators entsprechend der Kapazität zu bilden, ein Abstand zwischen dem ersten Draht und dem zweiten Draht dazu ausgelegt ist, den effektiven Raum zwischen der Anode und Kathode des effektiven Kondensators zu bilden, und die isolierende Beschichtung eine Dielektrizitätskonstante aufweist, wodurch das Dielektrikum im Raum bereitgestellt wird.

10. Transformator nach einem der Ansprüche 1 bis 9, wobei die Kapazität im Bereich von 1 pF bis 1 nF liegt.

11. LED-Beleuchtungstreiber, umfassend:
einen Ausgang zum Koppeln mit einer LED-Beleuchtungslast und
einen Schaltsperrwandler zum Liefern von Energie an den Ausgang und an die LED-Beleuchtungslast, wobei der Sperrwandler den Transformator nach einem der Ansprüche 1 bis 13 umfasst, der als Sperrwandler-Transformator funktioniert, wobei die zweite Spule mit dem Ausgang verbunden ist.

12. LED-Beleuchtungsvorrichtung, umfassend:
eine LED-Beleuchtungslast und
den LED-Beleuchtungstreiber nach Anspruch 11, wobei der Ausgang des LED-Beleuchtungstreibers mit der LED-Beleuchtungslast verbunden ist.

## Revendications

1. **Transformateur** comprenant une structure d'enroulement, dans lequel la structure d'enroulement comprend :
une première bobine (40), côté primaire, ayant des première et seconde extrémités, la première bobine (40) faisant partie d'un circuit côté primaire ;
une seconde bobine (50), côté secondaire, ayant des première et seconde extrémités, la seconde bobine (50) faisant partie d'un circuit côté secondaire ;
un premier fil (60) ; et
un second fil (70), le premier fil (60) et le second fil (70) sont différents de la première bobine (40) et de la seconde bobine (50) ;
dans lequel une première extrémité du premier fil (60) est connectée au côté primaire, dans lequel la première extrémité du premier fil (60) est connectée électriquement à un point froid du circuit côté primaire,
dans lequel au moins l'un parmi le premier fil et le second fil est isolé par un revêtement isolant,
dans lequel les premier et second fils sont côte à côte et adjacents l'un à l'autre, pour définir de ce fait une capacité (C_{Y}) entre eux, et sont enroulés dans la structure de bobine du transformateur,
dans lequel un point froid est un point qui est découplé d'une haute fréquence dv/dt, la capacité (C_{Y}) formant de ce fait un condensateur Y à travers le côté primaire et le côté secondaire permettant de supprimer une interférence électromagnétique,
dans lequel les premier et second fils (60,70) s'étendent au sein d'un espace entre les première et seconde bobines et dans lequel la première bobine est enroulée autour d'un axe (30) au niveau d'une portion radialement interne du transformateur, la seconde bobine est enroulée autour de l'axe au niveau d'une portion radialement externe du transformateur, et les premier et second fils sont enroulés au niveau d'une portion radialement centrale entre les portions radialement interne et externe,
**caractérisé en ce qu'**une première extrémité du second fil (70) est connectée au côté secondaire dans lequel la première extrémité du second fil (70) est connectée électriquement à un point froid du circuit côté secondaire.

2. Transformateur selon la revendication 1, dans lequel :
la première extrémité du premier fil (60) est couplée électriquement à une terre du circuit côté primaire, ou la première extrémité du premier fil (60) est couplée électriquement à une extrémité haute tension du circuit côté primaire ; et
la première extrémité du second fil (70) est couplée électriquement à une terre du circuit côté secondaire, ou la première extrémité du second fil (70) est couplée électriquement à une extrémité haute tension du circuit côté secondaire.

3. Transformateur selon la revendication 2, dans lequel l'extrémité haute tension du circuit côté primaire est connectée à une tension d'entrée, et l'extrémité haute tension du circuit côté secondaire est connectée à une charge.

4. Transformateur selon la revendication 1 ou 2, dans lequel une seconde extrémité du premier fil (60) est électriquement flottante et une seconde extrémité du second fil (70) est électriquement flottante, sans être connectée à l'un quelconque point dans le circuit côté primaire et le circuit côté secondaire.

5. Transformateur selon l'une quelconque des revendications 1 à 4, dans lequel :
la première extrémité (42) de la première bobine (40) est une extrémité basse tension par rapport à une seconde extrémité (44) de la première bobine (40) et est conçue pour être connectée à une borne d'arrivée de courant d'un commutateur (80) ;
la seconde extrémité (44) de la première bobine est conçue pour recevoir une tension d'entrée ;
le premier fil (60) comprenant une borne de connexion, au niveau de sa première extrémité, conçue pour être couplée à une borne de sortie de courant du commutateur (80) ;
la première extrémité (52) de la seconde bobine (50) est une extrémité basse tension par rapport à la seconde extrémité (54) de la seconde bobine (50) et est conçue pour être connectée à une borne négative d'une charge (82) ; et
la seconde extrémité (54) de la seconde bobine (50) est conçue pour être connectée à une borne positive de la charge (82).

6. Transformateur selon la revendication 5, dans lequel le transformateur est conçu pour être utilisé dans un convertisseur de puissance isolé comprenant un côté primaire et un côté secondaire, dans lequel :
la première (40) bobine et le premier fil (60) sont conçus pour être placés dans le côté primaire ; et
la seconde bobine (50) et le second fil (70) sont conçus pour être placés dans le côté secondaire.

7. Transformateur selon la revendication 5 ou 6, dans lequel la première extrémité de la première bobine (40) est couplée électriquement à la borne de sortie de courant du commutateur (80) par l'intermédiaire d'une résistance de détection (Rsense).

8. Transformateur selon l'une quelconque des revendications 1 à 7, dans lequel ledit au moins un parmi le premier fil (60) et le second fil (70) est à triple isolation.

9. Transformateur selon l'une quelconque des revendications 1 à 8, dans lequel la longueur et le diamètre du premier fil (60) et du second fil (70) sont conçus pour former une zone efficace de l'anode et de la cathode d'un condensateur efficace correspondant à la capacité, une distance entre le premier fil et le second fil est conçue pour former l'espace efficace entre l'anode et la cathode du condensateur efficace, et le revêtement isolant a une constante diélectrique fournissant de ce fait le diélectrique dans l'espace.

10. Transformateur selon l'une quelconque des revendications 1 à 9, dans lequel la capacité est dans la plage de 1 pF à 1 nF.

11. Circuit de pilotage d'éclairage à DEL comprenant :
une sortie pour couplage à une charge d'éclairage à DEL ; et
un convertisseur à transfert indirect à découpage permettant de délivrer de l'énergie à la sortie et à la charge d'éclairage à DEL, dans lequel le convertisseur à transfert indirect comprend le transformateur selon l'une quelconque des revendications 1 à 13, fonctionnant en tant que transformateur à transfert indirect, dans lequel la seconde bobine est connectée à la sortie.

12. Dispositif d'éclairage à LED comprenant :
une charge d'éclairage à DEL ; et
le circuit de pilotage d'éclairage à DEL selon la revendication 11, dans lequel la sortie du circuit de pilotage d'éclairage à DEL est connectée à la charge d'éclairage à DEL.
